# EUROPEAN PATENT SPECIFICATION

(11) **EP 3 095 310 B1**
(45) Date of publication and mention of the grant of the patent: **16.05.2018**
(21) Application number: 16170908.4
(22) Date of filing: 23.05.2016
(51) Int. Cl.: A01B 77/00

(54) **AGRICULTURAL APPARATUS**
LANDWIRTSCHAFTLICHE VORRICHTUNG
APPAREIL AGRICOLE

(30) Priority: 21.05.2015 GB 201508743; 20.08.2015 GB 201514867
(43) Date of publication of application: 23.11.2016
(73) Proprietor: Robert Thomas Farms Ltd, Nottingham, Nottinghamshire NG21 0PE (GB)
(72) Inventor: Thomas,, Richard Gretton, Nottingham, Nottinghamshire NG21 0PE (GB)
(74) Representative: Adamson Jones

(56) References cited:
- EP-A1- 2 213 150
- EP-A2- 0 461 893
- WO-A1-98/00002
- DE-C- 529 905
- FR-A1- 2 226 212
- US-B1- 6 192 992

## Description

The present invention relates to agricultural apparatus, in particular apparatus for separating undesirable objects such as stones and clods from soil.

The earth in fields often contains stones and clods (lumps of soil). These stones and clods may impede growth and quality of crops and may also cause wear and damage to machinery during harvesting. In preparing a field for cultivation, it is therefore desirable to remove stones from earth, and to break up or remove clods, in order to provide a bed of fine soil.

Before an operation of separating stones and breaking up clods commences, the earth in a field is typically shaped to provide furrows through which the wheels of tractors and other farm machinery can roll when driven through the field. The ground to be worked by farm machinery is located between the furrows, and will form the separated soil beds.

Apparatus for removing stones and clods, typically known as de-stoning devices, are typically attached to the back of a tractor in use. Alternatively, the de-stoning device may be a self-propelled vehicle (SPV). The SPV, or the tractor with the de-stoning device attached, then drives along the furrows through the field, to separate the stones and clods from the soil in the separated beds.

Typical de-stoning devices comprise a share, rollers and separating webs. There also exist de-stoning devices that comprise rollers but not separating webs and de-stoning devices that comprise separating webs but not rollers.

In conventional de-stoning devices, the share is a flat blade which digs into the ground as the de-stoning device is pulled along by the tractor. In other de-stoning devices, the share may be a blade that is positioned on a rotating shaft and digs into the ground as the shaft rotates. In either case, the share displaces earth which may contain stones and clods.

The earth that is displaced by the share is typically moved through the de-stoning device by rollers. The rollers often comprise projections, such that the rollers have a star-shaped structure. The rollers may also crumble up clods and compacted soil in order to prepare it for separation. The earth is then generally moved over the webs, which provide a sieving operation to separate the earth into soil and stones and to break up the clods into finer soil. The soil falls through the webs and/or rollers and is deposited on the ground beneath the de-stoning apparatus. The stones and any remaining clods are moved along the webs of the de-stoning apparatus, with the webs moving as a conveyer belt, and the stones and clods are then deposited from the back of the de-stoning device into the furrows between the soil beds. This process has the effect of providing a soil bed, between the furrows, from which stones and clods have been removed.

A conventional de-stoning device is known from WO98/00002. It should be noted that in the context of this application the terms 'ground', 'earth' and 'soil' are not used interchangeably. In particular, 'earth' refers to the unprocessed material that is removed from the ground by the apparatus. It includes loose soil, but generally also includes varying quantities of larger objects such as stones and/or clods and other objects that are undesirable in soil beds. 'Soil' in the context of the application refers to the processed material, from which these undesirable objects have been substantially removed or broken down.

It is desirable to adjust the depth of the share during a de-stoning operation, in order to ensure a consistent or specified final depth of separated soil in the soil bed. For example, if the earth contains a large amount of stones it is desirable to perform the de-stoning operation at a greater working depth, whereas if the earth contains fewer stones, it may not be necessary to perform the de-stoning operation to such a great depth. Furthermore, the required depth of deposited soil may vary depending on the variety or type of crop to be planted, for example potatoes, carrots, onions, etc.

Conventional de-stoning devices comprise means for manually adjusting the working depth of the share, for example prior to the de-stoning operation. This typically involves adjusting the angle at which the share enters the ground.

The depth of the deposited soil may be determined manually after the de-stoning operation, for example by inserting a measuring rod into the soil bed, and measuring the depth at which the rod hits compact earth beneath the deposited separated soil. The depth of deposited soil in a soil bed is often determined only periodically during a de-stoning operation, or upon its completion. Accordingly, if it is determined that the depth of deposited soil is less than the required depth, it may be necessary to repeat a significant part of, or possibly the entire de-stoning operation with the share adjusted to a greater working depth. If the depth of deposited soil is greater than the required depth, the process may have consumed unnecessary time and resources, and hence may not be cost effective. Additionally, because the depth is known only at discrete locations, it is possible that, in fields where the density of stones in the earth is not consistent over the area of de-stoning, the depth of deposited soil in certain areas may be unknown and may not be sufficient for the growth of crops.

It is an object of the present invention to provide a de-stoning device which overcomes or substantially mitigates some or all of the above mentioned and/or other disadvantages associated with conventional de-stoning devices.

According to an aspect of the invention, there is provided agricultural apparatus comprising a front portion, a rear portion and an intermediate portion between the front portion and the rear portion, the front portion comprising a share for engaging with ground to be worked and collecting earth as the apparatus moves across the ground, the intermediate portion comprising a conveyer for moving the collected earth and for separating the earth into loose soil and larger objects, and the rear portion comprising a sensor arrangement, wherein, in use, the loose soil is deposited onto the ground beneath the intermediate portion, and wherein the sensor arrangement determines the depth of the deposited soil.

The sensor arrangement may detect a change in density in the ground. The sensor arrangement may detect the depth at which the density of the earth changes. Hence, the sensor arrangement may detect the depth of the deposited soil.

The sensor arrangement may comprise an ultrasound device. In other examples of the apparatus, the sensor arrangement may comprise a physical probe. In further examples of the agricultural apparatus, the sensor arrangement may transmit and detect electromagnetic radiation.

The sensor arrangement may comprise an array of sensors. The array of sensors may determine depth of deposited soil along an axis perpendicular to the direction of travel of the apparatus. It may be advantageous to provide a measure of depth of deposited soil along the width of the apparatus if the depth of deposited soil is not uniform along the width of the apparatus.

The apparatus may comprise means to output the detected depth of deposited soil. The apparatus may comprise a display. The apparatus may comprise a user interface.

The apparatus may further comprise a control system and depth adjustment means for adjusting the depth of earth collection. The control system may output a signal to the depth adjustment means for adjusting the depth and/or angle at which the share engages the ground.

The control system may output the signal based on the determined depth of the deposited soil. The control system may compare the depth of the deposited soil with a desired depth and output a required adjustment signal automatically based on the comparison. The desired depth may be input by a user via the user interface.

The control system may output a required adjustment signal based on input by a user via the user interface.

The apparatus may sound an alarm if the required adjustment is not possible.

The apparatus may further comprise a location sensor. The location sensor may be located on or adjacent the sensor arrangement to determine the precise location of the sensor arrangement or may be offset from the sensor arrangement by a precise, known, distance. The location sensor may be a global positioning system sensor. The apparatus may comprise means to associate a location determined by the location sensor with a depth at said location determined by the sensor arrangement, and generate a map related to said association.

The apparatus may further comprise means for storing data regarding the depth of deposited soil over an area. The apparatus may comprise a memory.

The conveyer may be angularly adjustable, for example an adjustment mechanism may be provided to alter the height of one or both ends of the conveyor.

According to another aspect of the invention there is provided a method of separating earth into soil and larger objects, the method comprising providing agricultural apparatus having a sensor arrangement and a share, engaging the share with ground to be worked, collecting earth, separating the collected earth into soil and any larger objects, depositing the separated soil, and detecting the depth of the deposited soil using the sensor arrangement.

After the soil has been deposited, the position beneath the surface of the ground, beneath which there is unseparated earth and above which there is deposited soil, may be determined and retained as an absolute value, in addition to the depth of the deposited soil. Collecting information regarding this position may be advantageous for use at a later occasion, wherein during the time between the depositing of the separated soil and performing a later operation to the ground, the depth of deposited soil or the depth of furrows provided in the ground may have changed, due to weather conditions, for example.

The method may further comprise adjusting the depth of earth collection based on information from the sensor arrangement. Adjusting the depth of earth collection based on information from the sensor arrangement may be automatic. The method may comprise comparing the determined depth of deposited soil with a predetermined value and adjusting the depth of earth collection based on said comparison. Adjusting the depth of earth collection may comprise adjusting the angle and/or vertical depth at which the share engages the ground. The predetermined value may be input by a user. The predetermined depth may vary depending on the variety or type of crop intended to be grown in the deposited soil.

The method may further comprise determining a location and associating data of said location with a determined depth at said location.

The method may further comprise generating map data based on multiple associated locations and depths. The method may comprise storing the data in a memory.

The method may further comprise providing, on another occasion, a second agricultural apparatus, and adjusting the operation of said second agricultural apparatus, based on the stored data.

The second agricultural apparatus may be a plough or a planter or a harvester.

The second agricultural apparatus may comprise a location sensor. The second agricultural apparatus may comprise a sensor arrangement for determining the depth of deposited soil.

Embodiments of the invention will be described in further detail below by way of example only, with reference to the accompanying drawings of which:
Figure 1 is a side view of the apparatus according to an example of the invention;
Figure 2 is a top view of the apparatus according to an example of the invention;
Figure 3 is a rear view of the apparatus according to an example of the invention; and
Figure 4 is a side view of the apparatus according to another example of the invention.

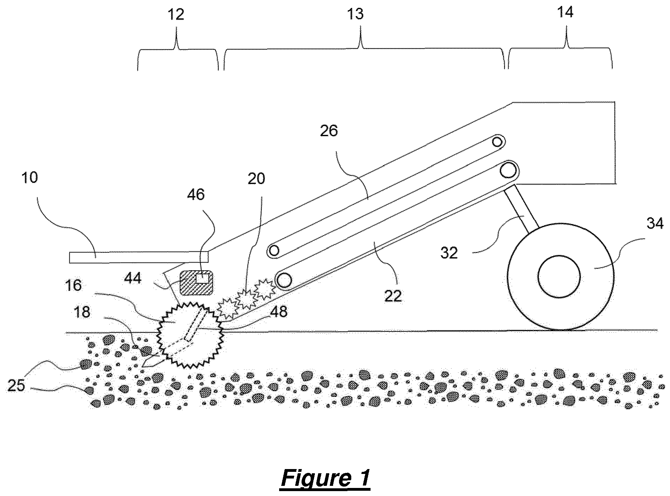

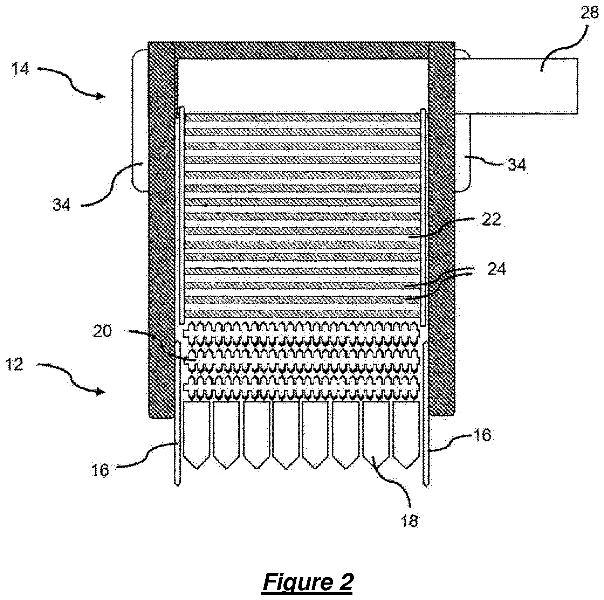

An example of an agricultural apparatus according to the invention in the form of a de-stoning device is shown in Figures 1, 2 and 3. The agricultural apparatus is towed by a driven vehicle such as a tractor, however in other examples, the agricultural apparatus may be a self-propelled vehicle. The agricultural apparatus comprises a tow-bar 10 for connection to the driven vehicle.

The agricultural apparatus comprises a front portion 12, and intermediate portion 13 and a rear portion 14. The front portion comprises the tow bar 10, intake discs 16 and the share 18.

The share 18 is a generally flat blade. In some examples of the agricultural apparatus the share 18 may comprise a single blade, whereas in other examples the share 18 may comprise a plurality of narrower share blades, for example eight share blades. The share 18 extends from the front portion of the agricultural apparatus and enters the ground at an oblique angle relative to the surface of the ground, in use.

An intake disc 16 is provided on each side of the share 18. The intake discs 16 are flat serrated discs which rotate through the ground as the apparatus is towed by a vehicle. In other examples the intake discs may be concave, and/or may have smooth edges. The intake discs 16 aid the entry of the share 18 into the ground and the feeding of earth on to the share 18.

Adjacent to the share there are provided rollers 20. The rollers 20 rotate in use, moving the earth collected by the share 18 towards the separator web 22. Only a single separator web 22 is shown for simplicity, but several can be provided in practice. The rollers 20 comprise projections to aid the movement of the earth towards the separator web 22. The projections on the rollers 20 are such that the rollers 20 are star-shaped. The projections may also aid the breaking up of clods.

The agricultural apparatus in the example embodiment of Figures 1 to 3 comprises both rollers 20 and a separator web 22, however in other examples the agricultural apparatus may comprise rollers but not a separator web, or may comprise a separator web but not rollers.

The separator web 22 extends from the rollers 20 to the rear portion 14 of the agricultural apparatus. The separator web 22 moves as a conveyer belt. The agricultural apparatus is angled such that at the rear portion 14 the separator web 22 is higher from the ground than at the front portion.

The separator web 22 comprises a series of parallel bars 24. The length of the bars 24 is approximately the width of the agricultural apparatus. The bars 24 are separated by a width that is less than the size of the stones or clods 25 to be separated from the earth, for example by a width of 30 mm. In use, the soil falls through the spaces between the bars 24 and is deposited on the earth beneath the agricultural apparatus, between the furrows. The stones and clods 25 are moved towards the rear portion 14 of the apparatus.

In some examples of embodiments the agricultural device comprises a second web or "clod mat" 26. The clod mat 26 lies above the separator web 22, with the earth moved by the rollers 20 between the clod mat 26 and the separator web 22. This clod mat 26 aids the breaking up of clods 25 as the clods 25 are moved along the separator web 22 towards the rear portion 14 of the apparatus. The clods 25 are ground between the clod mat 26 and the separator web 22. The clod mat 26 also acts as a moving conveyer belt.

The rear portion 14 comprises a cross conveyer 28. At the rear portion 14, the separator web 22 deposits the stones 25 onto the cross conveyer 28, which moves the stones 25 in a direction perpendicular to the direction of travel of the apparatus, and deposits the stones 25 in the furrows 30 between the soil beds or, in other examples, in a collecting vehicle driving parallel to the apparatus.

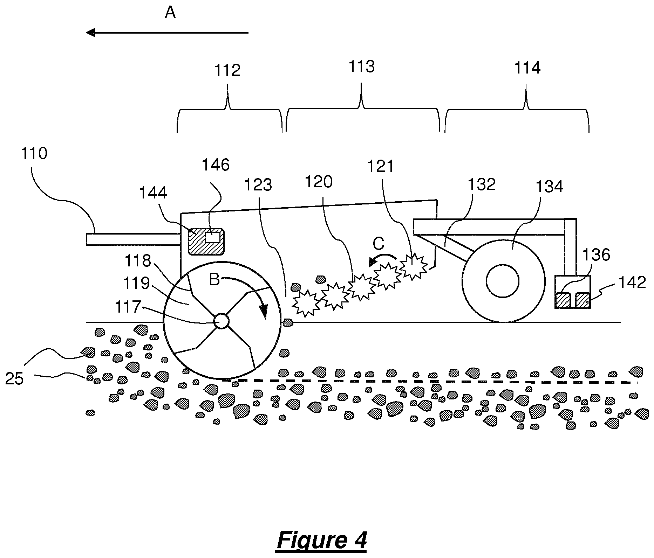

A further example of the invention is shown in Figure 4. The agricultural apparatus is towed by a driven vehicle such as a tractor, however in other examples, the agricultural apparatus may be a self-propelled vehicle. The agricultural apparatus comprises a tow-bar 110 for connection to the driven vehicle.

The agricultural apparatus comprises a front portion 112, an intermediate portion 113 and a rear portion 114. The front portion comprises the tow bar 110 and a rotor 119 comprising a plurality of blades, or shares 118.

The apparatus comprises a plurality of share blades 118 arranged around, and along the length of, a rotating shaft 117 to form a rotor 119. The rotor may comprise different numbers of share blades 118 depending on the length of the shaft 117 and the use requirements of the apparatus. In use, as the apparatus moves forwards (in the direction of arrow A), the rotor 119 rotates and the individual shares 118 collect earth into the rotor 119 from the ground. The rotor 119 rotates in a direction to oppose the direction of motion, ie in the opposite direction to normal passive rolling. In Figure 4, arrow A indicates the direction of motion of the apparatus and arrow B indicates the direction of rotation of the rotor 119.

The shares 118 collect earth which is moved on to a set of rollers 120 as the rotor 119 rotates. The rotating motion of the rotor 119 causes the collected earth to be cast over the rollers 120 in the intermediate portion 113 by the shares 118. Some earth may even be projected as far as the back roller 121, which is adjacent the rear portion 114 of the apparatus. The rollers 120 also rotate in use, conveying the earth collected by the shares 118 forwards towards the front portion 112 of the apparatus. The rollers 120 rotate in the opposite direction to share blades 118, as indicated by arrow C in Figure 4. The direction indicated by arrow C is also the opposite direction to the rotation of the rollers 20 in the example embodiment shown in Figures 1 to 3. Although the embodiment shown in Figure 4 comprises five rollers, other examples of the apparatus may comprise more or fewer than five rollers, and may also include means for helping to transfer or convey the earth to the rearmost roller 121 if required.

The rollers 120 comprise projections to aid the movement of the earth. The projections on the rollers 120 are such that the rollers 120 are star-shaped. The projections may aid the breaking up of clods.

As the earth is moved along the rollers 120 towards the front portion 112 of the apparatus, the earth is separated into soil and larger objects. The soil falls through the spaces between the rollers 120, and is deposited beneath the intermediate portion 113. The larger objects move along the rollers 120 and are deposited beneath the apparatus at an opening 123 provided between the rotor 119 and the rollers 120.

As shown in Figure 4, the larger objects are deposited at opening 123 towards the front portion of the apparatus, before separated soil is deposited at that location, and as such there is provided a layer of stones and clods on top of the unseparated earth. As the apparatus moves forwards, the soil is deposited beneath the intermediate portion of the apparatus on top of the layer of stones and clods.

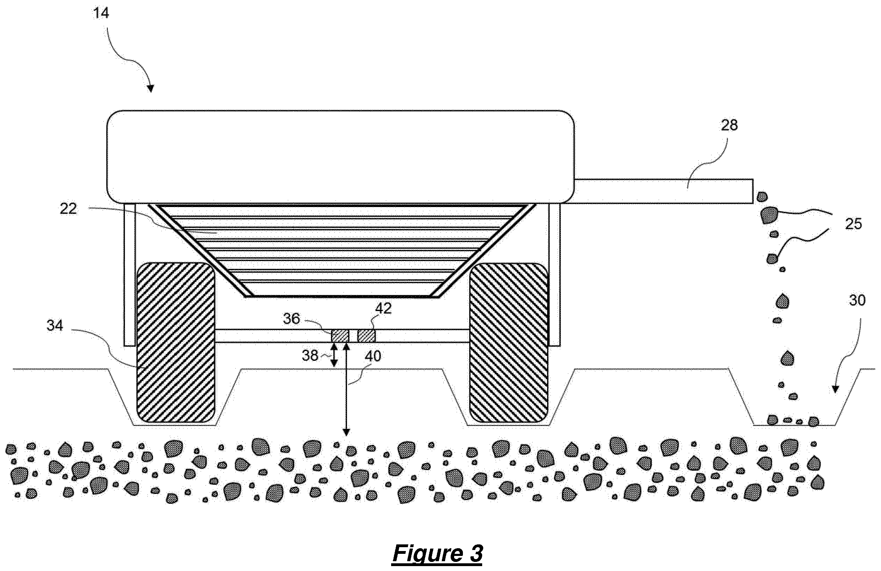

The apparatus of Figure 4 thus differs from the apparatus shown in Figures 1, 2 and 3, in that stones and larger objects are deposited first, with the separated soil being deposited on top as the apparatus moves forwards, rather than the stones and larger objects being deposited elsewhere, for example in the furrows, as shown in Figure 3. As such, machines such as that shown in Figure 4 may be shorter than those that require a cross conveyer to deposit larger objects in furrows, and may be used to span across more than one bed, in order to separate the earth in more than one bed simultaneously. It may be advantageous that the stones and clods are not deposited within the furrows, as the furrows may therefore be maintained at a constant depth. This may be beneficial in future operations such as harvesting, as it may reduce the requirement for height adjustment of equipment.

The rear portion 114 comprises a roller wheel 134 connected to the intermediate portion. The roller wheel has the effect of compressing the deposited soil.

The example embodiment of the apparatus as shown in Figure 4 may be used either on ground in which separated beds have been prepared or on unprepared ground.

The de-stoning devices described herein are merely illustrative examples. The agricultural apparatus of the invention may also comprise other forms of de-stoning devices known in the art.

According to the invention the rear portion 14, 114 of each apparatus also comprises a sensor arrangement 36, 136. The sensor arrangement comprises a sensor for detecting the depth of deposited soil, for example an ultrasound sensor. The depth of deposited soil is determined by detecting the distance from the sensor to the top of the deposited soil, as indicated by arrow 38 in Figure 3, and the distance from the sensor to the harder, denser earth beneath the deposited soil, as indicated by arrow 40 in Figure 3.

The sensor arrangement 36 is located on or near the back axle of the apparatus in Figures 1 to 3, between the two rear wheels 34. In the apparatus shown in Figure 4, the sensor arrangement 136 is located at the rear of the apparatus, behind the roller 134. At these locations substantially all of the soil from the de-stoning device has been deposited back onto the ground, so a reliable measurement of deposited soil depth can be obtained. The sensor arrangement 36, 136 is located close to the surface of the deposited soil.

A GPS receiver 42, 142 is also provided on the apparatus. Although shown in Figures 3 and 4 as a separate component, the GPS receiver 42, 142 could also form part of the sensor arrangement 36, 136. Alternatively, the GPS receiver 42, 142 may be mounted at a distance from the sensor arrangement 36, 136 to position it in a more prominent location to receive satellite signals. One or more offset values could then be used to maintain precise location data about the sensor arrangement 36, 136 and/or other parts of the apparatus.

The agricultural apparatus comprises a control system 44, 144. The control system 44, 144 comprises a processor and memory. The sensor arrangement 36, 136 provides a signal to the control system 44, 144 regarding the depth of the deposited soil. The control system 44, 144 also comprises a user interface 46, 146 for a user to input the desired working depth of the or each share 18, 118 of the apparatus. The user interface 46, 146 may comprise a touchscreen display. The user interface 46, 146 may display the current depth of the or each share 18, 118. The user interface may display the current depth of the deposited soil detected by the sensor arrangement 36, 136. The user interface 46, 146 may allow for manual adjustment of the depth of the or each share 18, 118. In other examples of the apparatus, the user interface 46, 146 may be located in the vehicle towing the apparatus. The user interface 46, 146 may communicate with the control system 44, 144 either through a wired connection or wirelessly, for example via a Bluetooth connection. The user interface may be provided on a remote device such as a portable hand-held device.

The depth of the deposited soil as determined by the sensor arrangement 36, 136 is compared with the desired depth, which may be predetermined or input by the user. If the depth is determined to be too great or too small compared to the desired depth, the working depth of the apparatus can be altered. The front portion 12, of the apparatus shown in Figures 1 to 3 comprises a depth adjustment means 48, with the ability to adjust the angle and/or vertical position at which the share 18 enters the ground, such that the depth of earth collection may be varied. In Figure 4, the tow-bar 110 provides depth adjustment means, with the ability to adjust the vertical position of the rotor 119, and therefore the depth at which each share 118 enters the ground.

The control system 44, 144 is configured to process the information received from the depth detection sensor arrangement and compare the soil depth at predetermined time intervals with a desired soil depth. The control system 44, 144 is also configured to effect, when necessary, automatic adjustment of the operative depth of the share via the depth adjustment means 48, 110.

Determining the depth of deposited soil throughout a de-stoning operation, and adjusting the depth of the or each share 18, 118 based on the depth of deposited soil is important to ensure a consistent or specified final depth of deposited soil in the soil bed. If, during a de-stoning operation, the depth of the soil is not determined and the depth of the or each share 18, 118 not adjusted, the depth of deposited soil across the area worked may be non-uniform, due to changes in the properties of the earth collected across the area of the operation. For example, in one region of the operation, the earth may have a high density of stones and clods, whereas in another region, the density of stones and clods in the earth may be low.

The angle of the apparatus can be altered by adjusting the height of the rear portion 14, 114 of the apparatus from the ground using hydraulics 32, 132 positioned above the rear wheels 34 or roller wheel 134. It may be preferable to adjust the angle of apparatus depending on properties of the collected earth. For example, altering the angle of apparatus may improve the breaking up of clods 25. Adjusting the angle of the apparatus may result in a change in the depth of the share, which may result in a change in the depth of deposited soil. It is therefore advantageous to detect the depth of deposited soil and adjust the depth of the share accordingly, even if the properties of the earth being collected are uniform across the area of operation.

In some examples of the invention there may also be provided means to override the automatic adjustment of the depth adjustment means 48, 110. For example, if the user is familiar with a particular area of land, the user may choose to set the depth of the or each share 18, 118 manually in that area.

The location of the sensor arrangement 36, 136 at the rear portion 14, 114 of the apparatus means that there will be a lag, related to the length of the apparatus, between the detection in the change of soil depth and a reactive adjustment in the depth of earth collection. As a result, there may remain fluctuations in the depth of deposited soil. However, any such lag will be relatively small, and still represents a significant improvement over the conventional system of arbitrary periodic sampling. The lag could be reduced by moving the sensor arrangement 36, 136 towards the front of the apparatus and/or by minimising the length of the apparatus. However, this could result in inaccurate measurement if the depth measurement is taken before all of the soil has been deposited and/or cause good soil to be discarded if insufficient time/distance is provided for the de-stoning operation.

The GPS receiver 42, 142 provides a signal to the control system 44, 144 regarding the location of the apparatus, and in particular the precise location of the sensor arrangement 36, 136. The control system 44, 144 is configured to generate a map of a soil area by pairing location data received from the GPS receiver 42, 142 with soil depth data received from the sensor arrangement 36, 136. The map data may be stored in the memory of the control system 44, 144 or on removable storage media. The map data may also be outputted on a display. The display may be located in the vehicle that tows or drives the apparatus, in order to inform the driver. In other examples of the invention, the map data may be displayed on the user interface 46, 146. The map data may be reused on other occasions, for example during ploughing, planting or harvesting.

Providing a record of the soil depth across an area goes some way to mitigating the problem of the lag in adjusting the depth of earth collection. The locations of any resulting small/short term fluctuations in soil depth would be recorded using the GPS receiver 42, 142, and this information would then be available during subsequent operations. This information together with a required soil depth for a subsequent operation would allow for an operation to be altered or temporarily suspended if necessary due to insufficient or inappropriate soil depth at any point.

The sensor arrangement 36, 136 and control system 44, 144 enables automatic depth adjustment, such that manual input by a user is not required. Automatic depth adjustment, used in combination with the stored map data, may enable the apparatus to be self-driven.

## Claims

1. Agricultural apparatus comprising a front portion (112, 12), a rear portion (114, 14) and an intermediate portion (113, 13) between the front portion (112, 12) and the rear portion (114, 14), the front portion (112, 12) comprising a share (118, 18) for engaging with ground to be worked and collecting earth as the apparatus moves across the ground, the intermediate portion (113, 13) comprising a conveyer for moving the collected earth and for separating the earth into loose soil and larger objects, wherein, in use, the loose soil is deposited onto the ground beneath the intermediate portion (113, 13), **characterised in that** the rear portion (114, 14) comprises a sensor arrangement (36, 136) which determines the depth of the deposited soil.

2. Agricultural apparatus according to claim 1, wherein the sensor arrangement (36, 136) comprises a physical probe or a device for emitting and sensing ultrasound signals or electromagnetic radiation.

3. Agricultural apparatus according to any preceding claim, further comprising depth adjustment means (48) for adjusting the depth at which the share (118, 18) engages the ground.

4. Agricultural apparatus according to claim 3, wherein the depth adjustment means (48) receives a signal/an output from a control system (144, 44).

5. Agricultural apparatus according to claim 4, wherein, in use, the control system (144, 44) compares the depth of the deposited soil with a desired depth and outputs a required adjustment signal automatically based on the comparison.

6. Agricultural apparatus according to claim 5, wherein the apparatus sounds an alarm if the required adjustment is not possible.

7. Agricultural apparatus according to any preceding claim, further comprising a location sensor (142,42)

8. Agricultural apparatus according to claim 7, further comprising means for associating a location determined by the location sensor (142, 42) with a depth at said location determined by the sensor arrangement, (136, 36) and generating a map related to said association.

9. A method of separating earth into soil and larger objects, the method comprising providing agricultural apparatus having a share (118, 18) and a sensor arrangement, (136, 36) engaging the share with ground to be worked, collecting earth, separating the collected earth into soil and any larger objects, depositing the separated soil and determining the depth of the deposited soil using the sensor arrangement.

10. A method according to claim 9, further comprising adjusting the depth of earth collection based on information from the sensor arrangement.

11. A method according to claim 9 or 10, further comprising determining a position beneath the surface of the ground, beneath which there is unseparated earth and above which there is deposited soil, and retaining said position as an absolute value.

12. A method according to any one of claims 9 to 11, further comprising determining a location and associating data of said location with a determined depth at said location.

13. A method according to claim 12, further comprising storing the data in a memory.

14. A method according to claim 13, further comprising providing, on another occasion, a second agricultural apparatus, and adjusting the operation of said second agricultural apparatus, based on the stored data.

15. A method according to claim 14, wherein the second agricultural apparatus is for any of ploughing, planting crops or harvesting crops.

## Patentansprüche

1. Landwirtschaftliche Vorrichtung, die einen Vorderabschnitt (112, 12), einen Hinterabschnitt (114, 14) und einen Zwischenabschnitt (113, 13) zwischen dem Vorderabschnitt (112, 12) und dem Hinterabschnitt (114, 14) beinhaltet, wobei der Vorderabschnitt (112, 12) eine Schar (118, 18) zum Ineingriffhehmen des zu bearbeitenden Bodens und Aufnehmen von Erde, wenn sich die Vorrichtung über den Boden bewegt, beinhaltet, wobei der Zwischenabschnitt (113, 13) einen Förderer zum Bewegen der aufgenommenen Erde und zum Trennen der Erde in loses Erdreich und größere Objekte beinhaltet, wobei, bei Verwendung, das lose Erdreich auf dem Boden unter dem Zwischenabschnitt (113, 13) abgelagert wird, **dadurch gekennzeichnet, dass** der Hinterabschnitt (114, 14) eine Sensoranordnung (36, 136) beinhaltet, die die Tiefe des abgelagerten Erdreichs bestimmt.

2. Landwirtschaftliche Vorrichtung gemäß Anspruch 1, wobei die Sensoranordnung (36, 136) eine physikalische Sonde oder eine Vorrichtung zum Aussenden und Erfassen von Ultraschallsignalen oder elektromagnetischer Strahlung beinhaltet.

3. Landwirtschaftliche Vorrichtung gemäß einem vorhergehenden Anspruch, die ferner ein Tiefenverstellungsmittel (48) zum Verstellen der Tiefe beinhaltet, bei der die Schar (118, 18) den Boden in Eingriff nimmt.

4. Landwirtschaftliche Vorrichtung gemäß Anspruch 3, wobei das Tiefenverstellungsmittel (48) ein Signal/einen Ausgang von einem Steuerungssystem (144, 44) empfängt.

5. Landwirtschaftliche Vorrichtung gemäß Anspruch 4, wobei, bei Verwendung, das Steuerungssystem (144, 44) die Tiefe des abgelagerten Erdreichs mit einer gewünschten Tiefe vergleicht und basierend auf dem Vergleich automatisch ein erforderliches Verstellungssignal ausgibt.

6. Landwirtschaftliche Vorrichtung gemäß Anspruch 5, wobei die Vorrichtung einen Alarm auslöst, falls die erforderliche Verstellung nicht möglich ist.

7. Landwirtschaftliche Vorrichtung gemäß einem vorhergehenden Anspruch, die ferner einen Positionssensor (142, 42) beinhaltet.

8. Landwirtschaftliche Vorrichtung gemäß Anspruch 7, die ferner ein Mittel zum Zuordnen einer durch den Positionssensor (142, 42) bestimmten Position auf eine durch die Sensoranordnung (136, 36) an der Position bestimmten Tiefe und Generieren einer auf die Zuordnung bezogenen Karte beinhaltet.

9. Verfahren zum Trennen von Erde in Erdreich und größere Objekte, wobei das Verfahren das Bereitstellen einer landwirtschaftlichen Vorrichtung, die eine Schar (118, 18) und eine Sensoranordnung (136, 36) aufweist, das Ineingriffnehmen des zu bearbeitenden Bodens mit der Schar, das Aufnehmen von Erde, das Trennen der aufgenommen Erde in Erdreich und größere Objekte, das Ablagern des getrennten Erdreichs und das Bestimmen der Tiefe des abgelagerten Erdreichs unter Verwendung der Sensoranordnung beinhaltet.

10. Verfahren gemäß Anspruch 9, das ferner das Verstellen der Tiefe der Erstaufnahme basierend auf Informationen von der Sensoranordnung beinhaltet.

11. Verfahren gemäß Anspruch 9 oder 10, das ferner das Bestimmen einer Lage unterhalb der Oberfläche des Bodens, unter der ungetrennte Erde vorliegt und über der abgelagertes Erdreich vorliegt, und das Festhalten der Lage als Absolutwert beinhaltet.

12. Verfahren gemäß einem der Ansprüche 9 bis 11, das ferner das Bestimmen einer Position und das Zuordnen der Daten der Position auf eine bestimmte Tiefe an der Position beinhaltet.

13. Verfahren gemäß Anspruch 12, das ferner das Speichern der Daten in einem Speicher beinhaltet.

14. Verfahren gemäß Anspruch 13, das ferner das Bereitstellen, bei anderer Gelegenheit, einer zweiten landwirtschaftlichen Vorrichtung und das Verstellen des Betriebs der zweiten landwirtschaftlichen Vorrichtung basierend auf den gespeicherten Daten beinhaltet.

15. Verfahren gemäß Anspruch 14, wobei die zweite landwirtschaftliche Vorrichtung für ein Beliebiges von Pflügen, Anbauen von Feldfrüchten oder Ernten von Feldfrüchten dient.

## Revendications

1. Appareil agricole, comprenant une partie antérieure (112, 12), une partie postérieure (114, 14), et une partie intermédiaire (113, 13) entre la partie antérieure (112, 12) et la partie postérieure (114, 14), la partie antérieure (112, 12) comprenant un soc (118, 18) s'engageant dans le sol à travailler, et recueillant de la terre au fur et à mesure du déplacement de l'appareil dans le sol, la partie intermédiaire (113, 13) comprenant un transporteur pour le déplacement de la terre ramassée, et pour trier la terre en séparant la terre meuble d'objets plus grands, de sorte qu'en cours d'usage la terre meuble soit déposée sur le sol, sous la partie intermédiaire (113, 13), **caractérisé en ce que** la partie postérieure (114, 14) comprend un système de capteur (36, 136) déterminant la profondeur du sol déposé.

2. Appareil agricole selon la revendication 1, le système de capteur (36, 136) comprenant une sonde physique ou un dispositif émettant et détectant des signaux ultrasonores ou un rayonnement électromagnétique.

3. Appareil agricole selon une quelconque des revendications précédentes, comprenant en outre un dispositif de réglage de la profondeur (48) permettant de régler la profondeur à laquelle le soc (118, 18) s'engage dans le sol.

4. Appareil agricole selon la revendication 3, le dispositif de réglage de la profondeur (48) recevant un signal / une sortie d'un système de commande (144, 44).

5. Appareil agricole selon la revendication 4, le système de commande (144, 44) comparant la profondeur du sol déposé avec une profondeur désirée, et émettant un signal de réglage requis, basé automatiquement sur la comparaison.

6. Appareil agricole selon la revendication 5, l'appareil émettant une alarme lorsque le réglage requis n'est pas possible.

7. Appareil agricole selon une quelconque des revendications précédentes, comprenant en outre un capteur de position (142,42).

8. Appareil agricole selon la revendication 7, comprenant en outre un dispositif pour associer une position déterminée par le capteur de position (142,42) à une profondeur de ladite position déterminée par le système de capteur (36, 136), et produisant une carte se rapportant à ladite association.

9. Méthode de séparation de la terre en sol et objets plus grands, la méthode comprenant la mise en place d'un appareil agricole muni d'un soc (118, 18) et d'un système de capteur (36, 136) engageant le soc avec la terre à travailler, recueillant de la terre, séparant la terre recueillie en sol et objets plus grands, déposant le sol séparé, et déterminant la profondeur du sol déposé en utilisant le système de capteur.

10. Méthode selon la revendication 9, comprenant en outre la profondeur de collecteur de la terre sur la base d'informations recueillies par le système de capteur.

11. Méthode selon la revendication 9 ou 10, comprenant en outre la détermination d'une position sous la surface du sol, sous laquelle se trouve de la terre non séparée, et au-dessus de laquelle se trouve du sol déposé, et conservant ladite position en tant que valeur absolue.

12. Méthode selon une quelconque des revendications 9 à 11, comprenant en outre la détermination d'un emplacement, et associant des données sur ledit emplacement avec une profondeur déterminée audit emplacement

13. Méthode selon la revendication 12, comprenant en outre le stockage des données dans la mémoire.

14. Méthode selon la revendication 13, comprenant en outre la mise en place, à une autre occasion, d'un deuxième appareil agricole, et le réglage de l'utilisation dudit deuxième appareil agricole sur la base des données stockées.

15. Méthode selon la revendication 14, le deuxième appareil agricole étant utilisé pour une quelconque des opérations suivantes : labourage, plantation, récolte.
